# EUROPEAN PATENT APPLICATION

(11) **EP 2 078 935 A1**
(43) Date of publication of application: **15.07.2009**
(21) Application number: 07831022.4
(22) Date of filing: 01.11.2007
(51) Int. Cl.: G01D 5/245, F16C 41/00, G01P 3/487

(54) **MAGNETIZED PULSAR RING AND ROLLING BEARING UNIT WITH SENSOR EQUIPPED THEREWITH**

(30) Priority: 02.11.2006 JP 2006298355
(71) Applicant: JTEKT Corporation, Osaka-shi Osaka 542-8502 (JP)
(72) Inventor: ISHII, Yasuhiko, Osaka-shi, Osaka 542-8502 (JP)
(74) Representative: Hager, Thomas Johannes
(86) International application number: PCT/JP2007/071288
(87) International publication number: WO 2008/053950

(57) **Abstract**

[Means for Resolution] A magnetized body is a bonded magnet and is fixed to a support member by integral injection molding. A bend portion extending axially outwardly is formed in an outwardly-directed flange portion of the support member. A come-off preventing concave portion is constituted by the bend portion and the outwardly-directed flange portion. The magnetized body enters this concave portion. Consequently, the magnetized body is prevented from performing relative movement with respect to the support member.

## Description

### Technical Field

This invention relates to a magnetized pulsar ring for use in a rolling bearing apparatus with a sensor, or the like, which is capable of detecting a rotation speed.

### Background Art

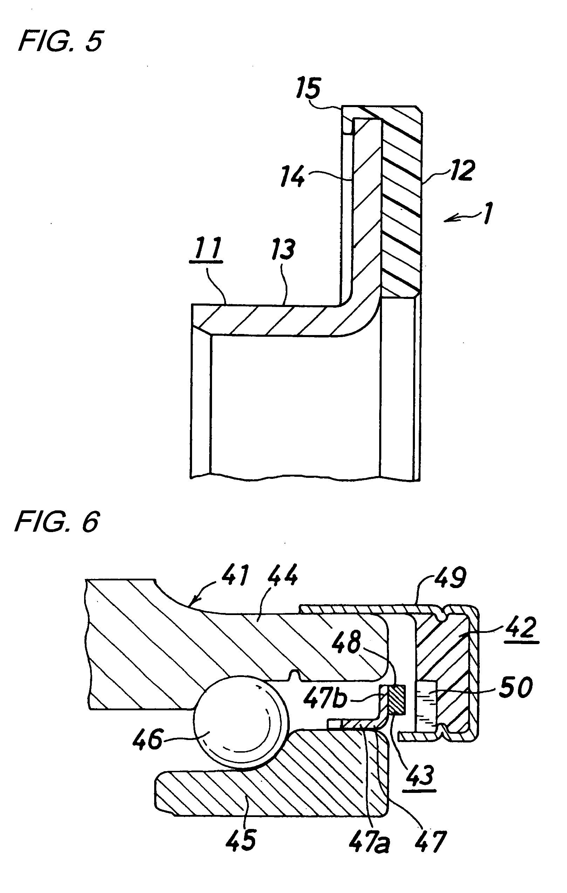

A railway vehicle or a motor vehicle uses a rolling bearing apparatus with a sensor, as illustrated in FIG. 6, in order to support an axle or a rotating shaft for transmitting a rotation to the axle, and to detect a rotation speed of the axle or the rotating shaft (see Patent Document 1).

As illustrated in FIG. 6, the rolling bearing apparatus with sensor has a rolling bearing (41), and a sensor apparatus (42) attached thereto, and a magnetized pulsar ring (43) serving as a portion to be detected.

The rolling bearing (41) has an outer ring (44) serving as a fixed ring, an inner ring (45) serving as a rotating ring, and a plurality of balls (46), which are arranged therebetween and serve as a plurality of rolling elements.

The magnetized pulsar ring (43) is constituted by a support member (47) fixed to the inner ring (45), and a magnetized body (48) provided in the support member (47).

The sensor apparatus (42) has a case (49) fixed to the outer ring (44), and a magnetic sensor (50) provided in the case (49), and is opposed to the magnetized pulsar ring (43) from an axially outer side.

The support member (47) of the magnetized pulsar ring (43) is constituted by a cylindrical portion (47a) fit onto an outer circumference of the inner ring (45), and an outwardly-directed flange portion (47b) provided in a right end part of the cylindrical portion (47a), and performs relative rotation with respect to the magnetic sensor (50) to thereby generate a magnetic flux density change.

Sometimes, such a magnetized pulsar ring is formed into a configuration integrated with a seal apparatus. As a rolling bearing apparatus with a sensor using this magnetized pulsar ring, there has been known a rolling bearing apparatus constituted by a rolling bearing (51) having a fixed ring (52), a rotating ring (53) and a rolling element (54) arranged between both rings (52, 53), a fixed-side seal member (55) having a core (56) fit-fixed to the fixed ring (52) and an elastic seal (57) attached to the core (56), a rotating-side seal member (58) having a cylindrical portion (59) fit-fixed to the rotating ring (53) and a flange portion (60), which is connected to an axial end portion of the cylindrical portion (59) and extends towards the fixed-side seal member (55), a sensor (61) supported by the fixed-side seal member (55) via a resin (62), and a magnetized body (63) provided on a side surface of the flange portion (60) of the rotating-side seal member (58), as illustrated in FIG. 7 (Patent Document 2). In this rolling bearing apparatus with a sensor, the rotating-side seal member (58) and the magnetized body (63) correspond to the magnetized pulsar ring. This rolling bearing apparatus with a sensor has an advantage in that the fixed-side seal member (55) with the sensor (61) and the rotating-side seal member (magnetized pulsar ring) (58) with the magnetized body (62) can be preliminarily assembled (packed).
Patent Document 1: JP-A-2003-279587
Patent Document 2: JP-A-2005-098387

### Disclosure of the Invention

### Problems that the Invention is to Solve

In the aforementioned magnetized pulsar ring, sometimes, the magnetized body formed by magnetizing magnetic powders using rubber as a binder is damaged by a foreign material or the like. The manufacture of the aforementioned magnetized pulsar ring requires the process of bonding the magnetized body to the support member. Consequently, the manufacturing cost of the aforementioned magnetized pulsar ring is high.

Thus, it is considered that a scratch resistance is increased by performing integral injection molding on the magnetized body using a resin-bonded magnet as the magnetized body to fix the magnetized body to the support member, and that the cost is reduced by shortening a manufacturing process. However, in a case where the resin-bonded magnet is used, the magnet is relatively weak against thermal shock. Thus, it is difficult to fix the magnetized body to the support member.

An object of this invention is to provide a magnetized pulsar ring enabled to increase the scratch resistance by using a resin-bonded magnet as a magnetized body and by fixing the magnetized body to a support member, to reduce the cost thereof by shortening the manufacturing process thereof, and to make sure of enhancing the thermal shock resistance and the fixation of the magnetized body in a case where a resin-bonded magnet is used.

### Means for Solving the Problems

A magnetized pulsar ring according to this invention is constituted by a support member having a cylindrical portion and an outwardly-directed flange portion provided at an end of the cylindrical portion, and a disc-like magnetized body provided on the outwardly-directed flange portion of the support member. This magnetized pulsar ring is featured in that the magnetized body is a bonded magnet, and is fixed to the support member by integral injection molding, that a bend portion extending axially outwardly is formed in the outwardly-directed flange portion, that a come-off preventing concave portion is formed in the outwardly-directed flange portion including the bend portion, and that relative movement of the magnetized body with respect to the support member is prevented by making a radial outer edge portion of the magnetized body enter this concave portion.

Ferrite powder + PPS (polyphenyl sulfide resin), ferrite powder + PA66 (polyamide resin), rare earth magnetic powder + PPS, rare earth magnetic powder + PA66, ferrite powder + rare earth magnetic powder +PPS, ferrite powder + rare earth magnetic powder + PA66 and the like are suitable as the material of the resin-bonded magnet. Combinations of other types of magnetic powder and resins can be employed as the material of the resin-bonded magnet. Further, a reinforcement, such as a glass fiber, can be added to the resin. Ferritic stainless steel, such as SUS430, is suitable as the material of the support member.

The resin-bonded magnet is injection-molded integrally with the support member (slinger). Subsequently, the resin-bonded magnet is magnetized by a magnetizing apparatus such that N-poles and S-poles are arranged at uniform intervals.

The come-off preventing concave portion can be constituted by the outwardly-directed flange portion of the support member by forming the bend portion into a shape in which the magnetized body is circumvoluted. The come-off preventing concave portion can be formed by cutting down a part of inner surfaces of the outwardly-directed flange portion of the support member and/or the bend portion. As an example of the former case, the magnetized pulsar ring can be configured such that a radial outer edge part of the outwardly-directed flange portion is formed to be thin, that the bend portion constituted by a cylindrical portion which is continued from the radial outer edge part so as to extend axially outwardly, and an inwardly-directed flange portion continued from an axially outward end part of the cylindrical portion is formed, and that the come-off preventing concave portion is constituted by the radial outer edge part of the outwardly-directed flange portion and the bend portion by providing the inwardly-directed flange portion in the bend portion. Alternatively, the magnetized pulsar ring can be configured such that a radial outer edge part of the outwardly-directed flange portion is formed to be thin, that the bend portion is formed by being tapered so as to be continued from this radial outer edge part, and that the come-off preventing concave portion is constituted by the radial outer edge part of the outwardly-directed flange portion and the bend portion by tapering the bend portion so that a diameter of the bend portion becomes gradually smaller towards an axially outward end thereof. Further, as an example of the latter case, the magnetized pulsar ring can be configured such that the bend portion is formed like a cylinder so as to be continued from a radial outer edge part of the outwardly-directed flange portion, and that the come-off preventing concave portion is formed by denting an inner surface of a boundary portion between the radial outer edge part and the bend portion. Alternatively, the magnetized pulsar ring can be configured such that the bend portion is formed like a cylinder so as to be continued from a radial outer edge part of the outwardly-directed flange portion, and that the come-off preventing concave portion is formed by denting an inner surface of the bend portion.

Each of the come-off preventing concave portions is annular-shaped. However, in order to more enhance effects of preventing the come-off of the magnetized body (those of preventing the magnetized body from performing relative movement), concave parts (serrations) can be formed at predetermined intervals in a circumferential direction of the support member, or one or plural notches can be formed in the support member, in addition to this annular concave portion.

The magnetized pulsar ring according to the present invention can be appropriately used in a sensor-equipped rolling bearing apparatus provided with a rolling bearing configured to have a pair of coaxially arranged rings and a plurality of rolling elements placed between the rings, with a sensor device configured to have a magnetic sensor and to be fixed to one of the rings, and with a magnetized pulsar ring connected to the other of the rings, such that the magnetized pulsar ring constitutes a portion to be detected by the sensor device.

### Advantages of the Invention

According to the magnetized pulsar ring of this invention, the magnetized body is a bonded magnet. Thus, the scratch resistance can be enhanced. The magnetized body is fixed to the support member by performing integral injection molding. Consequently, the cost can be reduced by shortening the manufacturing process. In addition, the come-off preventing concave portion is formed in the outwardly-directed flange portion including the bend portion. The magnetized body enters this concave portion. Consequently, the come-off tendency of the magnetized body, which is problematic in the case of using the resin-bonded magnet, is solved.

### Brief Description of the Drawings

FIG. 1 is a cross-sectional view illustrating a first embodiment of a magnetized pulsar ring according to this invention.
FIG. 2 is a cross-sectional view illustrating a second embodiment of a magnetized pulsar ring according to this invention.
FIG. 3 is a cross-sectional view illustrating a third embodiment of a magnetized pulsar ring according to this invention.
FIG. 4 is a cross-sectional view illustrating a fourth embodiment of a magnetized pulsar ring according to this invention.
FIG. 5 is a cross-sectional view illustrating a comparative example against a magnetized pulsar ring according to this invention.
FIG. 6 is a cross-sectional view illustrating an example of a rolling bearing apparatus with a sensor, to which a magnetized pulsar ring according to this invention is applied.

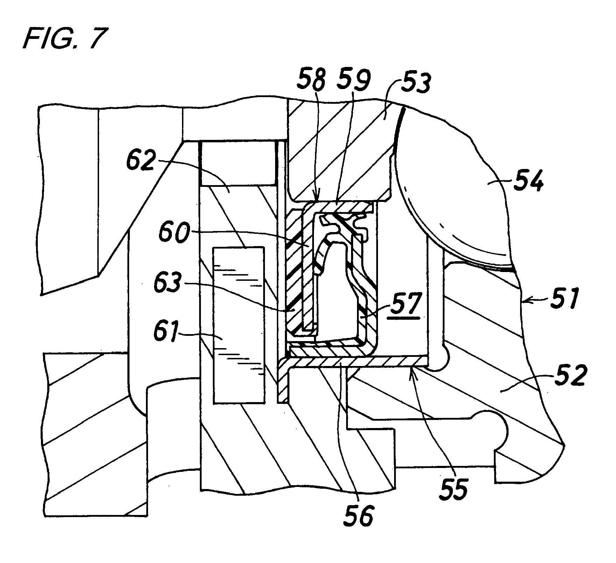

FIG 7 is a cross-sectional view illustrating another example of a rolling bearing apparatus with a sensor, to which a magnetized pulsar ring according to this invention is applied.

### Best Mode for Carrying Out the Invention

Hereinafter, embodiments of this invention are described with reference to the accompanying drawings.

FIG. 5 illustrates a comparative example corresponding to a magnetized pulsar ring according to this invention. In the following description, it is assumed that right and left indicate right and left in each drawing, respectively.

As shown in FIG. 5, a magnetized pulsar ring (1) is constituted by a support member (11) fixed to an inner ring, and a magnetized body (12) provided in the support member (11).

The support member (11) is constituted by a cylindrical portion (13) fit onto an outer periphery of the inner ring, and an outwardly-directed flange portion (14) provided in a right end portion of the cylindrical portion (13).

The magnetized body (12) is a resin-bonded magnet, and is fixed over the entire periphery of a right side surface of the flange portion (14) of the support member (11) by integral injection molding.

A cross-sectionally inverted-L-shaped come-off preventing portion (15) engaging with an outer periphery of the flange portion (14) is provided on an outer periphery of the magnetized body (12). The magnetized body (12) is prevented by the come-off preventing portion (15) from coming off the support member (11).

In the aforementioned configuration, the support member (11) is made of metal, such as stainless steel. Consequently, the magnetized body (12) constituted by the resin-bonded magnet, and the support member (11) differ in linear expansion coefficient from each other. Thus, at thermal expansion or thermal contraction, the magnetized body (12) and the support member (11) differ in amount of deformation from each other. The magnetized body (12) is liable to be broken by a thermal shock. More particularly, the come-off preventing portion (15) formed in the magnetized body 12 is weak, as compared with another portion (perforated disc-like signal output portion) of the magnetized body (12). Stress is susceptible to be concentrated to the come-off preventing portion. Accordingly, the come-off preventing portion (15) is the weakest part against a thermal shock. Thus, the magnetized pulsar ring according to the present invention is enabled to prevent the come-off thereof, as will be described below. Consequently, countermeasures against the come-off and the thermal shock can be made compatible with each other.

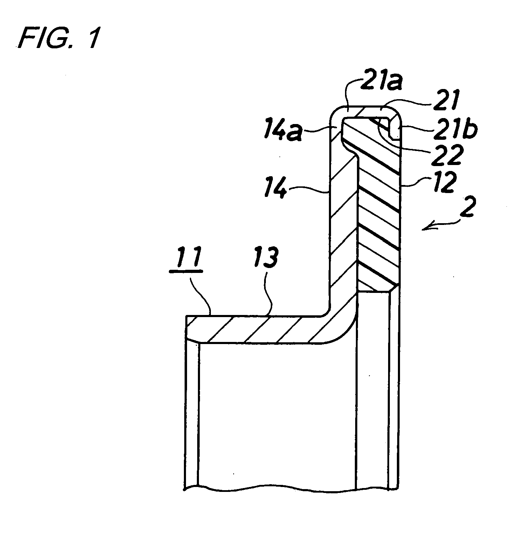

FIG. 1 illustrates a first embodiment of the magnetized pulsar ring according to this invention.

As illustrated in this figure, a magnetized pulsar ring (2) is constituted by a support member (11) fixed to an outer periphery of an inner ring, and a magnetized body (12) provided in the support member (11).

The support member (11) is constituted by a cylindrical portion (13) fit onto an outer periphery of an inner ring, and an outwardly-directed flange portion (14) provided at a right end part of the cylindrical portion (13).

The magnetized body (12) is a resin-bonded magnet, and is fixed over the entire periphery of a right side surface of the outwardly-directed flange portion (14) of the support member (11) by integral injection molding.

A radial outer edge part (14a) of the outwardly-directed flange portion (14) is formed to be thin. A bend portion (21) constituted by a cylindrical portion (thin part) (21a) continued from this radial outer edge part (14a) so as to extend rightwardly (axially outwardly), and an inwardly-directed flange portion (21b) continued from a right end of the cylindrical portion (21a) is formed in the radial outer edge part (14a). The bend portion (21) has a substantially same thickness as that of the thin part (14a) of the outwardly-directed flange portion (14) so as to be able to be easily formed by press working. Because the inwardly-directed flange portion (21b) is formed in the bend portion (21), an annular come-off preventing concave portion (22) is constituted by the radial outer edge part (14a) of the outwardly-directed flange portion (14) and the bend portion (21). A radial outer edge portion of the magnetized body (12) enters this concave portion (22). Consequently, the magnetized body (12) is prevented from performing relative movement with respect to the support member (11). Incidentally, a reduction in the overall thickness of the radial outer edge portion of the magnetized body (12) due to the inwardly-directed flange portion (21b) of the bend portion (21) is compensated by making the radial outer edge part (14a) of the outwardly-directed flange portion (14) thin. The radial outer edge portion of the magnetized body (12) is fit into each of the thin part (14a) and the bend portion (21) such that the radial outer edge portions of the magnetized body (12) and the support member (11) are equal in axial overall thickness to other portions (e.g., radial inner edge portions thereof). Consequently, the magnetized body (12) can be prevented from coming off in axial and radial directions. That is, because the aforementioned radial outer edge portion thereof is fit into the flange portion (21b), the magnetized body (12) can be prevented from coming off in the axial direction. Because the aforementioned radial outer edge portion thereof is fit into the thin part (14a), the magnetized body (12) can be prevented from coming off in the radial direction.

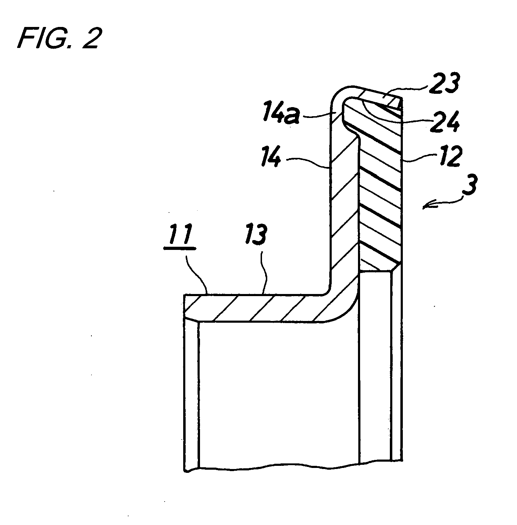

FIG. 2 illustrates a second embodiment of the magnetized pulsar ring according to this invention.

As illustrated in FIG. 2, a magnetized pulsar ring (3) is constituted by a support member (11) fixed to an outer periphery of an inner ring, and a magnetized body (12) provided in the support member (11).

The support member (11) is constituted by a cylindrical portion (13) fit onto an outer periphery of an inner ring, and an outwardly-directed flange portion (14) provided at a right end part of the cylindrical portion (13).

The magnetized body (12) is a resin-bonded magnet, and is fixed over the entire periphery of a right side surface of the outwardly-directed flange portion (14) of the support member (11) by integral injection molding.

A radial outer edge part (14a) of the outwardly-directed flange portion (14) is formed to be thin. A tapered bend portion (23) is formed so as to be continued from this radial outer edge part (thin part) (14a). The bend portion (23) has a substantially same thickness as that of the thin part (14a) of the outwardly-directed flange portion (14) so as to be able to be easily formed by press working. A tapered part of the bend portion (23) is such that a diameter thereof becomes gradually smaller towards a right end (axially outwardly). Consequently, an annual come-off preventing concave portion (24) is constituted by the radial outer edge part (14a) of the outwardly-directed flange portion (14) and the bend portion (23). The radial outer edge portion of the magnetized body (12) enters this concave portion (24). Consequently, the magnetized body (12) is prevented from performing relative movement with respect to the support member (11). The overall thickness of the radial outer edge portion of the magnetized body (12) is made thicker than the other portion thereof by making the radial outer edge part (14a) of the outwardly-directed flange portion (14) thin. That is, similarly to the first embodiment, the second embodiment is constructed so that the bend portion (23) and the thin part (14a) prevent the magnetized portion from coming off in the axial direction and the radial direction.

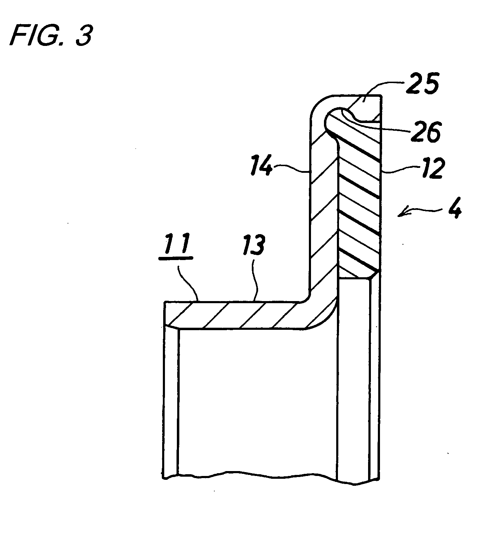

FIG. 3 illustrates a third embodiment of the magnetized pulsar ring according to this invention.

As illustrated in this figure, a magnetized pulsar ring (4) is constituted by a support member (11) fixed to an outer periphery of an inner ring, and a magnetized body (12) provided in the support member (11).

The support member (11) is constituted by a cylindrical portion (13) fit onto an outer periphery of an inner ring, and an outwardly-directed flange portion (14) provided at a right end part of the cylindrical portion (13).

The magnetized body (12) is a resin-bonded magnet, and is fixed over the entire periphery of a right side surface of the outwardly-directed flange portion (14) of the support member (11) by integral injection molding.

A cylindrical bend portion (25) is formed so as to be continued from a radial outer edge part (14a) of the outwardly-directed flange portion (14). An annular come-off preventing concave portion (26) is formed by denting an inner surface of a boundary portion between the radial outer edge part (14a) and the bend portion (25). Consequently, because the radial outer edge part of the magnetized body (12) enters there, the magnetized body (12) is prevented from performing relative movement with respect to the support member (11) (e.g., the come-off in the axial and radial directions of the magnetized body (12) is prevented).

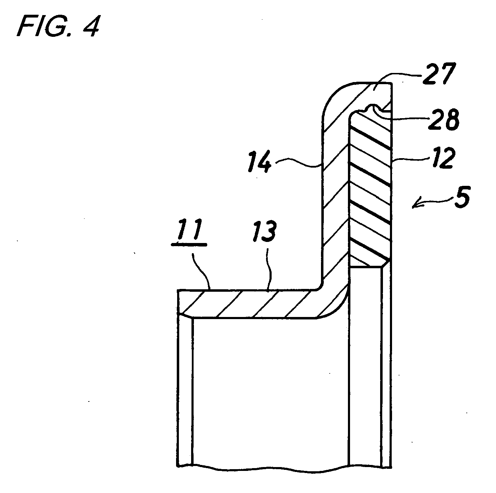

FIG. 4 illustrates a fourth embodiment of the magnetized pulsar ring according to this invention.

As illustrated in this figure, a magnetized pulsar ring (5) is constituted by a support member (11) fixed to an outer periphery of an inner ring, and a magnetized body (12) provided in the support member (11).

The support member (11) is constituted by a cylindrical portion (13) fit onto an outer periphery of an inner ring, and an outwardly-directed flange portion (14) provided at a right end part of the cylindrical portion (13).

The magnetized body (12) is a resin-bonded magnet, and is fixed over the entire periphery of a right side surface of the outwardly-directed flange portion (14) of the support member (11) by integral injection molding.

A cylindrical bend portion (27) is formed so as to be continued from a radial outer edge part (14a) of the outwardly-directed flange portion (14). An annular come-off preventing concave portion (28) is formed by denting an inner peripheral surface of the bend portion (27). Consequently, because the radial outer edge part of the magnetized body (12) enters this concave portion (28), the magnetized body (12) is prevented from performing relative movement with respect to the support member (11).

Incidentally, the shapes of the bend portions and the come-off preventing concave portions are not limited to the aforementioned ones. Further, notches and serrations can be appropriately formed at predetermined intervals in the circumferential or radial direction of the support member (11) to thereby enhance effects of preventing the relative movement of the magnetized body (12) with respect to the support member (11). With this structure, the magnetized body (12) is prevented from coming off in the axial direction and the radial direction.

Although not shown, the magnetized pulsar ring according to each embodiment of the present invention is used in a sensor-equipped rolling bearing apparatus, similarly to a case illustrated in FIG. 6. The sensor-equipped rolling bearing device has a rolling bearing and a sensor device provided therein. The magnetized pulsar ring is used as a portion to be detected by the sensor device.

The rolling bearing has an outer ring serving as a fixed ring, and a plurality of balls serving rolling elements disposed between the outer ring and the inner ring. Incidentally, a rolling bearing using rollers as rolling elements, instead of balls, can use the magnetized pulsar ring according to each embodiment as a portion to be detected by the sensor device.

The sensor device has a case fixed to the outer ring, and a magnetic sensor provided in the case. The sensor device is made to face the magnetized pulsar ring from an axially outer side. Consequently, a rotation of the magnetized pulsar ring is detected by the magnetic sensor.

## Claims

1. A magnetized pulsar ring provided with a support member having a cylindrical portion and an outwardly-directed flange portion provided at an end of said cylindrical portion, and with a disc-like magnetized body provided on the outwardly-directed flange portion of said support member, said magnetized pulsar ring, wherein said magnetized body is a bonded magnet, and is fixed to the support member by integral injection molding, that a bend portion extending axially outwardly is formed in said outwardly-directed flange portion, that a come-off preventing concave portion is formed in said outwardly-directed flange portion including said bend portion, and that relative movement of said magnetized body with respect to said support member is prevented by making a radial outer edge portion of said magnetized body enter this concave portion.

2. The magnetized pulsar ring according to claim 1, wherein a radial outer edge part of said outwardly-directed flange portion is formed to be thin, wherein said bend portion constituted by a cylindrical portion which is continued from said radial outer edge part so as to extend axially outwardly, and an inwardly-directed flange portion continued from an axially outward end part of said cylindrical portion is formed, and wherein said come-off preventing concave portion is constituted by said radial outer edge part of said outwardly-directed flange portion and said bend portion by providing said inwardly-directed flange portion in said bend portion.

3. The magnetized pulsar ring according to claim 1, wherein a radial outer edge part of said outwardly-directed flange portion is formed to be thin, that said bend portion is formed by being tapered so as to be continued from this radial outer edge part, and wherein said come-off preventing concave portion is constituted by said radial outer edge part of said outwardly-directed flange portion and said bend portion by tapering said bend portion so that a diameter of said bend portion becomes gradually smaller towards an axially outward end thereof.

4. The magnetized pulsar ring according to claim 1, wherein said bend portion is formed like a cylinder so as to be continued from a radial outer edge part of said outwardly-directed flange portion, and wherein said come-off preventing concave portion is formed by denting an inner surface of a boundary portion between said radial outer edge part and said bend portion.

5. The magnetized pulsar ring according to claim 1, wherein said bend portion is formed like a cylinder so as to be continued from a radial outer edge part of said outwardly-directed flange portion, and wherein said come-off preventing concave portion is formed by denting an inner surface of said bend portion.

6. A sensor-equipped rolling bearing apparatus which includes a rolling bearing configured to have a pair of coaxially arranged rings and a plurality of rolling elements placed between said rings, a sensor device configured to have a magnetic sensor and to be fixed to one of said rings, and a magnetized pulsar ring according to claim 1 configured to be connected to the other of said rings, wherein said magnetized pulsar ring constitutes a portion to be detected by said sensor device.
